# EUROPÄISCHE PATENTSCHRIFT

(11) **EP 4 079 577 B1**
(45) Veröffentlichungstag und Bekanntmachung des Hinweises auf die Patenterteilung: **29.07.2026**
(21) Anmeldenummer: 22176642.1
(22) Anmeldetag: 14.03.2013
(51) Int. Cl.: B60Q 3/78, B60Q 3/64, C25D 5/56, C25D 5/02, C25D 5/14, C25D 5/48

(54) **BELEUCHTUNGSEINRICHTUNG, INSBESONDERE EINE KONTURBELEUCHTUNG FÜR EIN KRAFTFAHRZEUG**
LIGHTING DEVICE, IN PARTICULAR CONTOUR ILLUMINATION FOR A MOTOR VEHICLE
DISPOSITIF D'ÉCLAIRAGE, EN PARTICULIER ÉCLAIRAGE CONTOUR POUR UN VÉHICULE AUTOMOBILE

(30) Priorität: 16.03.2012 DE 102012005397
(43) Veröffentlichungstag der Anmeldung: 26.10.2022
(62) Teilanmeldung aus: 13711571.3
(73) Patentinhaber: AUDI AG, 85045 Ingolstadt (DE); Gerhardi Lüdenscheid GmbH, 58511 Lüdenscheid (DE)
(72) Erfinder: PFEIL, Marcus, 90537 Feucht (DE); WEHRLIN, Peter, 74172 Neckarsulm (DE); KIESLICH, Dirk, 58840 Plettenberg (DE)
(74) Vertreter: Bardehle Pagenberg Partnerschaft mbB Patentanwälte Rechtsanwälte

(56) Entgegenhaltungen:
- EP-A2- 2 159 664
- DE-A1- 102007 009 583
- DE-B3- 102006 011 641
- DE-U1- 202008 008 877
- US-A- 5 935 691

## Beschreibung

Die Erfindung betrifft eine Beleuchtungseinrichtung, insbesondere Konturbeleuchtung für ein Kraftfahrzeug.

Beleuchtungseinrichtungen sind in unterschiedlichster Art und Form bekannt. Sie dienen einerseits zur Raumbeleuchtung, andererseits aber mitunter auch zur Kenntlichmachung oder Hervorhebung bestimmter Gegenstände oder Objekte. Derartige Beleuchtungen werden häufig Konturbeleuchtungen genannt, da sie optisch die Form oder Kontur eines hervorzuhebenden Gegenstandes betonen. Solche Konturbeleuchtungen kommen sowohl bei Geräten oder Maschinen, aber beispielsweise auch in einem Kraftfahrzeug zum Einsatz. Insbesondere dort finden sie beispielsweise Anwendung bei Lautsprechern, Tastern und Bedienfelder, Cupholdern etc. Diese Beleuchtungseinrichtungen sind letztlich Leuchtstreifen, die bestimmte Konturen hervorheben bzw. betonen sollen. Üblicherweise sind solche Konturbeleuchtungen, also Linienbeleuchtungen, mittels eines Lichtleiters realisiert, der entlang der hervorzuhebenden Kontur verläuft. Dieser Lichtleiter ist entweder direkt einsehbar, oder hinter einer davor angeordneten Streuscheibe verbaut. In den Lichtleiter wird Licht an einer Stirnseite eingekoppelt, das Licht tritt seitlich längs des Lichtleiters aus, so dass letztlich ein linienförmiger Lichtstreifen sichtbar ist.

Um die Eigenschaften eines solchen Licht leitenden Elements wie beispielsweise eines Lichtleiters nicht negativ zu beeinflussen benötigt ein solches Element eine Mindestquerschnittsfläche von ca. 7 mm², wobei eine Höhe/Breite bzw. ein Durchmesser von 2,5 mm nicht unterschritten werden darf. Bei Streuscheiben sind die begrenzenden Parameter die Herstell- und Integrierbarkeit in den Bauraum. Heutige bekannte Konturbeleuchtungen weisen aus diesem Grund eine beachtliche Breite auf, d. h., dass der helle Lichtstreifen relativ breit ist, also üblicherweise ca. 2,5 mm oder mehr. Ein derart breiter Lichtstreifen ist jedoch in manchen Fällen nicht wünschenswert, sei es aus optischen Gründen, da beispielsweise das hervorzuhebende Bauteil relativ klein ist und ein derart breiter Lichtstreifen quasi überdimensioniert wäre, sei es aus baulichen Gründen, da sich mitunter ein derart breiter Lichtstreifen nicht immer integrieren lässt.

Der Erfindung liegt damit das Problem zugrunde, eine Beleuchtungseinrichtung, insbesondere in Form einer Konturbeleuchtung für ein Kraftfahrzeug, anzugeben, die es ermöglicht, einen sehr schmalen Lichtstreifen auszubilden.

Die DE 20 2008 008 877 U1 betrifft eine verschwenkbar gelagerte Lamelle in einer Lamellenanordnung in einem Gehäuse einer Luftdüse mit einer vorderen Luftaustrittsöffnung und einem rückseitigen oder seitlichen Anschluss an einen Luftzuführschacht.

Die DE 10 2006 011641 B3 betrifft ein Betätigungsteil für eine elektrische Schaltanordnung mit einem unter Einsatz von Kunststoff gefertigten Betätigungskörper zum Betätigen der Schaltanordnung und mit mindestens einem am Betätigungskörper angeordneten Schaltsymbolelement zur Anzeige der Schaltfunktion der Schaltanordnung. Es wird vorgeschlagen, dass der Betätigungskörper als beschichtetes Kunststoffformteil ausgestaltet ist, in das das mindestens eine Schaltsymbolelement integriert ist, wobei das Kunststoffformteil zumindest bereichsweise aus metallisierbarem Kunststoffmaterial gefertigt ist, das eine Metallschicht trägt, und wobei das Schaltsymbolelement aus nicht metallisierbarem Kunststoffmaterial gefertigt ist.

Die DE 10 2007 009583 A1 betrifft ein Verbundformteil aus Kunststoff mit mindestens einer partiell vorgesehenen Kunststofffolie. Um besondere optische Effekte zu erzielen, besteht die Kunststofffolie aus einem stromlos metallisierbaren oder galvanisierbaren Material oder aus einem Material mit partiell bearbeiteten Zonen und ist stromlos metallisierbar oder galvanisierbar oder mit Metall bedampfbar. Die Kunststofffolie ist entweder an der Innenseite oder an der Außenseite vor oder nach dem Hinterspritzen metallisiert, galvanisiert oder mit Metall bedampft.

Die US 5 935 691 A betrifft einen metallischen, zweifarbig extrudierten Kunststoffschlüssel, der ein galvanisierbares Kunststoffmaterial und ein nicht galvanisierbares Kunststoffmaterial umfasst. Das galvanisierbare Kunststoffmaterial wird auf den umgebenden Bereich eines Buchstabens oder einer Figur aufgespritzt. Dann wird auf die Oberfläche eine Beschichtung mit einer Schicht aus lichtdichter galvanischer Beschichtung aufgebracht. Dadurch wird das galvanisierbare Kunststoffmaterial beschichtet, um eine erforderliche Metalloberfläche zu erhalten.

Die EP 2 159 664 A2 betrifft ein dreh- oder verschiebbar gelagertes, hinterleuchtbares Bedienelement aus Kunststoff mit Mitteln zur mechanischen Kraftübertragung und/oder mit Mitteln für elektrische Steuerungen, wobei das Bedienelement aus einem Kernelement aus transluzentem Licht, nicht galvanisierbarem Kunststoff besteht, dass es von einem Mantelelement mindestens an der oder den sichtbaren Seiten umgeben ist, das auf das Kernelement aufgespritzt oder als Einzelteil aufklippbar ist und aus einem galvanisierbaren Kunststoff besteht.

Zur Lösung des zuvor genannten Problems ist erfindungsgemäß eine Beleuchtungseinrichtung, insbesondere eine Konturbeleuchtung für ein Kraftfahrzeug, gemäß den Merkmalen von Anspruch 1 vorgesehen.

Das Gehäuse der erfindungsgemäßen Beleuchtungseinrichtung, die bevorzugt als Konturbeleuchtung dient, ist aus einem für eingekoppeltes Licht transparenten Kunststoffmaterial, so dass es folglich möglich ist, in das Gehäuse Licht einzukoppeln und auszukoppeln. Dies geschieht mittels eines Lichtleiters, der dem Gehäuse zugeordnet ist. Der Lichtleiter strahlt Licht zur Seite hin ab, dieses Licht wird in das Gehäuse eingekoppelt. Da das Gehäuse im verbauten Zustand nur abschnittsweise sichtbar ist, ist zumindest dieser Bereich mit einer für das eingekoppelte Licht nicht transparenten Beschichtung belegt, vorliegend einer galvanisch abgeschiedenen Metallschicht zur Verleihung einer Metalloptik.

Um eine sehr dünne Lichtaustrittslinie realisieren zu können, wird erfindungsgemäß die Beschichtung so aufgebracht, dass sie nur in den abzudeckenden Bereichen aufgebracht wird und in dem den schmalen Leuchtstreifen ausbildenden Bereich bereits beim Aufbringen nicht abgeschieden wird. Dies erfolgt durch einen entsprechenden Aufbau des Gehäuses, worauf nachfolgend noch eingegangen wird.

Die Lichtaustrittslinie sollte eine Breite < 1 mm, insbesondere zwischen 0,3 - 0,5 mm aufweisen.

Die Beschichtung selbst ist eine galvanisch abgeschiedene Schicht. Da diese Beschichtung sichtbar ist, kann das Beschichtungsmaterial je nach gewünschter Sichtoptik verwendet werden. Mit der Metallbeschichtung wird der Beleuchtungseinrichtung letztlich eine Metalloptik verliehen.

Das Gehäuse selbst ist aus einem Kunststoffmaterial, z.B. PMMA oder PC, welches hinreichend transparent ist. Auf die in Frage kommenden Kunststoffmaterialen, insbesondere PMMA oder PC, kann eine Metallschicht, insbesondere eine Chromschicht nicht appliziert werden. Folglich sieht, insbesondere im Falle von PMMA und PC, die Erfindung vor, das Gehäuse aus zwei unterschiedlichen, jedoch hinreichend transparenten Kunststoffmaterialen zu fertigen, die vorzugsweise in einem 2K-Verfahren simultan verarbeitet werden können. Auf das eigentliche, den Gehäuse-Hauptkörper bildende erste Kunststoffmaterial, z.B. PMMA oder PC wird eine ebenfalls ausreichend transparente Schicht aus einem zweiten Kunststoffmaterial, z.B. ABS gebracht, die als Träger für die galvanisch aufzubringende Metallschicht oder - sofern erforderlich - den Mehrschichtaufbau (z.B. eine Schichtstruktur aus Ni - Cu - Cr) dient.

Dabei wird die zweite Kunststoffschicht bereits so aufgebracht, dass ein die Lichtaustrittslinie bildender schmaler Streifen des ersten Kunststoffmaterials, also z.B. der PMMA oder PC frei bleibt, also nicht mit dem zweiten Kunststoffmaterial wie z.B. ABS belegt wird. Wird nun auf die zweite Kunststoffschicht die Metallschicht(struktur) galvanisch abgeschieden, so haftet diese nicht auf dem freiliegenden PMMA oder PC, so dass die Austrittslinie automatisch frei bleibt.

Weitere Vorteile, Merkmale und Einzelheiten der Erfindung ergeben sich aus den im Folgenden ausgeführten Ausführungsbeispielen sowie anhand der Zeichnung:

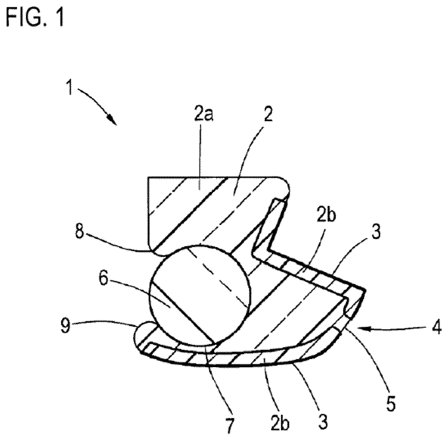

Fig. 1 ist eine Prinzipdarstellung einer erfindungsgemäßen Beleuchtungseinrichtung einer Ausführungsform im Querschnitt mit einem aus zwei unterschiedlichen Kunststoffmaterialien bestehenden Gehäuse.

Fig. 1 zeigt eine Ausführungsform einer erfindungsgemäßen Beleuchtungseinrichtung 1, umfassend ein Gehäuse 2 aus einem für in das Gehäuse eingekoppeltes Licht transparenten Kunststoff, beispielsweise PMMA. Das Gehäuse ist länglich. Fig. 1 zeigt lediglich eine Schnittansicht. Seine Grundform entspricht letztlich der Form des Bauteils respektive der Kontur, die beleuchtet werden soll. Der in Fig. 1 gezeigte Querschnitt ist lediglich exemplarisch.

Das Licht wird in das Gehäuse 2 mittels eines Lichtleiters 6 eingekoppelt. Der Lichtleiter 6 ist unmittelbar im Gehäuse 2 aufgenommen. Hierzu ist im Gehäuse 2 eine im gezeigten Beispiel querschnittliche im Wesentliche runde Aufnahme 7 ausgebildet, in die der querschnittliche ebenfalls runde Lichtleiter 6 eingesetzt ist. Dies ist ohne weiteres über einen leichten Klemmsitz möglich, in dem, wie gezeigt, eine beidseitige leichte Hinterschneidung realisiert ist, nämlich mittels der beiden Schultern 8, 9. Wird nun Licht in den Lichtleiter 6 von einer Stirnseite her eingekoppelt, so läuft das Licht durch den Lichtleiter 6. Aufgrund der Lichtleiterstruktur wird das Licht nicht nur längs geführt, sondern auch zur Seite ausgekoppelt und zwangsläufig in das Gehäuse 2 eingekoppelt. Dort kann es lediglich über die Lichtaustrittslinie 5 nach außen austreten, ist also dort in Form einer dünnen Lichtlinie, die die Konturbeleuchtung bildet, sichtbar.

Das Gehäuse 2 besteht aus zwei unterschiedlichen Kunststoffmaterialien 2a und 2b. Das Kunststoffmaterial 2a, z.B. PMMA oder PC, bildet den Gehäuse-Hauptkörper. In einem 2K-Verfahren ist das Kunststoffmaterial 2b, z.B. ABS, also ein ebenfalls transparentes oder zumindest transluzentes Material, außenseitig lokal auf das erste Kunststoffmaterial 2a gebracht. Es dient als Träger für eine in Form einer galvanisch aufgebrachten Metallschicht oder Metallmehrschichtstruktur aufzubringende Beschichtung 3, z.B. einer Cr-Schicht oder einer Schichtstruktur aus Ni - Cu - Cr. Die Beschichtung ist für in das Gehäuse 2 eingekoppelte Licht nicht transparent.

Das erste Kunststoffmaterial 2a liegt im Bereich 4 somit frei, bildet also die Lichtaustrittslinie 5 selbst aus. Auf das zweite Kunststoffmaterial 2b ist wiederum die Beschichtung 3 in Form einer Metallschicht oder Metallschichtstruktur galvanisch abgeschieden, wobei sich die Beschichtung 3 nur auf dem zweiten Kunststoffmaterial 2b, also dem ABS abscheidet, während das erste Kunststoffmaterial 2a nicht belegt wird bzw. die metallene Beschichtung hierauf nicht haftet.

## Patentansprüche

1. Beleuchtungseinrichtung, insbesondere Konturbeleuchtung für ein Kraftfahrzeug, mit einem em Gehäuse (2) aus einem für in das Gehäuse eingekoppeltes Licht transparenten Kunststoffmaterial, das als Streuscheibe fungiert und zumindest in dem Bereich seiner Außenseite, der in der Montagestellung sichtbar ist mit einer für das eingekoppelte Licht nicht transparenten Beschichtung (3) belegt ist,
wobei das Gehäuse (2) aus einem den Gehäusehauptkörper bildenden ersten Kunststoffmaterial (2a) besteht, das außenseitig lokal mit einem zweiten Kunststoffmaterial (2b) belegt ist, das mit der Beschichtung (3) versehen ist, wobei das zweite Kunststoffmaterial (2b) derart aufgebracht ist, dass das erste Kunststoffmaterial (2a) in einem Bereich (4) zur Ausbildung einer schmalen Lichtaustrittslinie (5) freiliegt und in diesem Bereich nicht beschichtet ist, die Beschichtung eine galvanisch abgeschiedene Metallschicht oder Metallschichtstruktur ist, und wobei sich die Beschichtung (3) nur auf dem zweite Kunststoffmaterial (2b) abscheidet, während das erste Kunststoffmaterial (2a) nicht belegt wird, und
mit einem Lichtleiter (6), der das über die Lichtaustrittslinie abzugebende Licht in das Gehäuse emittiert, **dadurch gekennzeichnet, dass** das Gehäuse (2) eine Aufnahme (7) für den Lichtleiter (6) aufweist, und der Lichtleiter (6) eine derartige Lichtleiterstruktur aufweist, dass von einer Stirnseite des Lichtleiters (6) her eingekoppeltes Licht den Lichtleiter (6) durchläuft, wobei das Licht nicht nur längs geführt, sondern auch zur Seite ausgekoppelt und zwangsläufig in das Gehäuse eingekoppelt wird.

2. Beleuchtungseinrichtung nach Anspruch 1, **dadurch gekennzeichnet, dass** das erste Kunststoffmaterial (2a) PMMA oder PC und das zweite Kunststoffmaterial (2b) ABS ist.

## Claims

1. Lighting assembly, in particular contour lighting for a motor vehicle, comprising a housing (2) made of a plastic material which is transparent to light coupled into the housing and which functions as a diffusing screen and is covered at least in the region of its outer side, which is visible in the mounting position, with a coating (3) which is not transparent to the coupled light,
wherein the housing (2) consists of a first plastic material (2a) which forms the housing main body and which is covered locally on the outer side with a second plastic material (2b) which is provided with the coating (3), wherein the second plastic material (2b) is applied in such a way that the first plastic material (2a) is exposed in a region (4) for forming a narrow light exit line (5) and is not coated in this region, the coating is a galvanically deposited metal layer or metal layer structure, and wherein the coating (3) is deposited only on the second plastic material (2b) while the first plastic material (2a) is not covered, and with
a light guide (6) which emits the light to be emitted via the light exit line into the housing, **characterized in that** the housing (2) has a receptacle (7) for the light guide (6), and the light guide (6) has a light guide structure such that coupled light from an end side of the light guide (6) passes through the light guide (6), wherein the light is not only guided longitudinally but is also coupled out to the side and is necessarily coupled into the housing.

2. Lighting assembly according to Claim 1, **characterized in that** the first plastic material (2a) is PMMA or PC and the second plastic material (2b) is ABS.

## Revendications

1. Dispositif d'éclairage, en particulier éclairage de contour pour un véhicule automobile, avec un boîtier (2) en une matière plastique transparente pour la lumière couplée dans le boîtier, qui agit comme un diffuseur et est recouvert d'un revêtement (3) non transparent pour la lumière couplée au moins dans la zone de sa face extérieure, visible dans la position de montage,
dans lequel le boîtier (2) est constitué d'une première matière plastique (2a) formant le corps principal de boîtier, qui est recouverte localement sur le côté extérieur d'une deuxième matière plastique (2b) qui est pourvue du revêtement (3), dans lequel la deuxième matière plastique (2b) est appliquée de sorte que la première matière plastique (2a) soit exposée dans une zone (4) pour former une étroite ligne de sortie de lumière (5) et ne soit pas revêtue dans cette zone, le revêtement étant une couche métallique ou une structure de couche métallique séparée galvaniquement, et dans lequel le revêtement (3) se sépare uniquement sur la deuxième matière plastique (2b), tandis que la première matière plastique (2a) n'est pas recouverte, et avec un guide de lumière (6) qui émet la lumière à émettre par la ligne de sortie de lumière dans le boîtier,
**caractérisé en ce que** le boîtier (2) présente un logement (7) pour le guide de lumière (6), et le guide de lumière (6) présente une structure de guide de lumière telle que la lumière couplée d'une face frontale du guide de lumière (6) traverse le guide de lumière (6), dans lequel la lumière est non seulement guidée longitudinalement, mais également découplée latéralement et inévitablement couplée dans le boîtier.

2. Dispositif d'éclairage selon la revendication 1, **caractérisé en ce que** la première matière plastique (2a) est du PMMA ou du PC, et la deuxième matière plastique (2b) est de l'ABS.
